Europäisches Patentamt

**European Patent Office** (11) Publication number: **0 005 320**

Office européen des brevets **A2**

(12) **EUROPEAN PATENT APPLICATION**

(21) Application number: **79300551.3**

(22) Date of filing: **03.04.79**

(51) Int. Cl.²: **C 08 L 23/32, H 01 B 3/30**

---

(30) Priority: **11.04.78 GB 1416778**

(43) Date of publication of application: **14.11.79 Bulletin 79/23**

(84) Designated Contracting States: **BE DE FR GB IT NL SE**

(71) Applicant: **Exxon Research and Engineering Company, P.O.Box 390 200 Park Avenue, Florham Park New Jersey 07932 (US)**

(72) Inventor: **Van Ek, Arnold Cornelis, Nieuwland 80, B-1900 Overijse (BE)**
Inventor: **Woods, Frank, Avenue J Van Genegen 1, B-1150 Brussels (BE)**

(74) Representative: **Bawden, Peter Charles et al, 15 Suffolk Street, London SW1Y 4HS (GB)**

(54) **A cross-linkable olefin polymer composition stabilized for direct contact with copper and an untinned copper conductor coated with this composition.**

(57) Olefine polymer or copolymer insulation may be applied directly to untinned copper conductors and cross-linked in contact therewith without severe oxidation damage if the cross-linkage copolymer contains from 0.5 to 10 parts by weight of zinc sulphide.

EP 0 005 320 A2

The present invention relates to improved cross-linked or cross-linkable olefine polymer electrical insulating materials especially olefine polymer elastomer compositions. The invention also relates to the use of such compositions for the insulation of copper and to copper so insulated. Elastomers such as ethylene propylene co- and ter-polymers (EPM and EPDM) are widely used as electrical insulation for copper conductors but these elastomers tend to be degraded by contact with copper leading to breakdown of the insulation or in certain instances the insulant sticking to the copper which in the case of copper wire can prevent it being stripped therefrom to make connections. In particular the copper tends to degrade the insulant when hot and since elastomers are generally extruded onto the copper as compositions containing a cross linking agent and then heat soaked in contact with the conductor to effect crosslinking the insulation can become degraded and stick to the wire before the cable is used.

It has therefore been common practice to coat the copper wire with a layer of tin to prevent contact between the copper and the elastomeric insulating material. With the increase in price of tin this has become a very expensive technique as well as requiring the undesirable step of coating the wire.

It has been proposed to include free radical scavenger antioxidants such as 2-mercaptobenzoimidazole in an elastomeric insulant to stabilise against copper degradation. These materials are however expensive and can have disadvantages with insulants which are cross-linked or cured in contact with the conductor since these insulants usually contain peroxide catalysts to effect cross-linking and the presence of a free radical scavenger reduces the potency of the peroxide and thus more of it is required with further increases to the costs.

It is an aim of the present invention to provide a simple, cheap technique whereby the above mentioned problems are overcome and which allows an olefine polymer cross-linkable elastomeric insultant to be applied directly to untinned copper conductors and cross-linked in contact therewith without unacceptable oxidative degradation of the insultant.

The present invention therefore provides a cross-linkable composition stabilized for direct contact with copper comprising an olefine polymer or copolymer containing from 0.5 to 10 parts by weight of the composition of zinc sulphide and from 1 to 5 parts by weight of a cross-linking agent per 100 parts of the olefine polymer or copolymer.

It has been proposed in United Kingdom Patent 1194968 that zinc sulphide may be included in olefine polymers to improve their stability against copper induced degradation. There is however no suggestion that the olefine polymer be cross-linked in contact with the copper. We have found that the presence of the zinc sulphide inhibits oxidation degradation of the olefine polymer when in contact with copper so allowing the insulant to be applied directly to copper wire without needing to coat the wire with tin. In addition we find that the presence of zinc sulphide in insulating formulations containing a cross-linking agent does not interfere with the operation of the free-radical generating cross-linking agents traditionally included in the cable coating formulations that are cured after application to the cable. The zinc sulphide may also replace some or all of the zinc oxide that is frequently used in cable coating formulations to give an added economic advantage.

Our invention is applicable to all olefine polymers used in electrical insulation including polyethylene, polypropylene, co- and ter-polymers of ethylene and propylene and blends of these materials which are cured after application to the conductor. The invention is particularly useful with the cross-linkable ethylene/propylene copolymer elastomers. These copolymers preferably contain from 20 to 95 mole % more preferably from 55 to 90 mole % ethylene and optionally a third diunsaturated monomer such as 5 ethylidene-norbornene or hexadiene. When such a termonomer is present we prefer that the copolymer contain from 5 to 25 weight % more preferably 10 to 15 weight % of the termonomer.

The insulating materials of the present invention may contain any of the other additives usually included in cable coating materials. For example they may contain fillers such as calcined clay, titanium dioxide and zinc oxide although the latter may not be necessary given the presence of the zinc sulphide. They may also contain the plasticisers and oil extenders traditionally used in cable coating compositions.

Our invention is applicable to elastomeric insulation containing any type of cross-linking agent and examples of suitable agents include the well known organic peroxide cross-linking agents such as dicumyl peroxide, bis (tertiary butyl peroxyisopropyl) benzene. These cross-linking agents are generally included in an amount of from 1 to 5 parts per 100 parts by weight of olefine copolymer, preferably from 1.6 to 4 parts by weight of the cross-linking agent although they are often supplied as concentrates in polymer of filler of the composition.

The grade and quality of the zinc sulphide used in our compositions is not critical and for economic reasons we prefer to use the cheapest available material. We have found that a material commercially available as Lithopone is particularly suitable which is a material containing about 28 wt.% of zinc sulphide and about 72 wt.% of barium sulphate and it is believed that when this materials is included in the formulation the barium sulphate has little or no effect other than acting as an additional filler. The presence of zinc sulphide in the insulating material has the added advantage that it is itself a pigment so that it may not be necessary to include some of the colouring methods traditionally included in cable coating compositions. The amount of zinc sulphide that should be included is not critical but depends on the exact nature of the insulating material, the size and shape of the copper insulator and the maximum temperatures at which the wire is likely to operate but we have found that at least 0.5 parts by weight of the composition should be included whilst for economic reasons it is preferable not to use more than 10 parts by weight. No special compounding techniques are needed to introduce the zinc sulphide into the formulation.

The insulating compositions of the present invention may be applied to the copper conductor by conventional methods generally when the conductor is wire it is extruded onto the wire in a cross head die and the coated wire then heat soaked to effect cross-linking. The conditions that are used for the extrusion and cross-linking depend upon the nature of the olefine polymer and the cross-linking agent. However, when using our preferred ethylene/propylene copolymers containing peroxide cross-linking agents the extrusion is typically performed in an extruder with barrel temperatures in the range 60 - 80°C and head temperatures in the range 80 - 100°C. The cross-linking is preferably continuous by vulcanising in steam at a temperature from 195°C to 210°C. The rate of passage through the vulcanizer depending upon polymer thickness and steam temperature. Alternatively the insulated conductor may be vulcanised separately in a heated autoclave, generally at lower temperatures, about 140 - 160°C for longer times. We have found that under these typical conditions the zinc sulphide may be present without interfering with the operation of the cross-linking agent as compared to the free radical scavengers previously proposed as oxidation degradation inhibitors which tended to mop up the cross-linking agent.

The present invention also provides an untinned copper conductor coated with an insulator comprising a crosslinked olefine polymer containing from 0.5 to 10 parts by weight of zinc sulphide.

0005320

The invention is applicable to all types of copper and copper containing conductors. Although especially useful for the insulation of electrical wire it may also also be used with electrical condensers and mouldings with copper inserts.

The present invention is illustrated but in no way limited by reference to the following Examples.

EXAMPLE 1

A typical cable coating formulation was prepared from an elastomers comprising ethylene, propylene, ethlidene-norbornene terpolymers (100 parts by weight of a mixture of 50 parts of each of the materials commercially available as Vistalon 5600 and Vistalon 2504) with unsaturation in the side chain of the polymer, 175 parts by weight of filler, 26.5 parts by weight of plasticisers and oil extenders and 1 part by weight of the anti-oxidant poly-trimethyl dihydoquinone commercially available as "Flectol H". Various formulations were prepared from this basic mixture containing in addition the materials mentioned below.

Formulation 1 - 8 parts by weight of zinc oxide, 1 part by weight of 2-mercaptobenzoimidazole and 7 parts by weight of bis (tertiary butyl peroxyisopropyl) benzene.

Formulation 2 - 10 parts by weight of "Lithopone" - 28 wt.% zinc sulphide 72 wt.% barium sulphate) 6.5 parts by weight of the bis (tertiary butyl peroxyisopropyl) benzene.

Formulation 3 - 10 parts by weight of "Lithopone", 1 part by weight of 2-mercaptobenzoimidazole and 7 parts by weight of bis (tertiary butyl peroxyisopropyl) benzene.

These elastomeric compositions were compounded into two millimetre thick sheets which were vulcanized for 15 minutes at 180°C in contact with a clean copper plate, they were then conditioned for 24 hours at ambient temperature and then heated for 7 days at 135°C in contact with the copper.

It was found that Formulation 1 which contained no Lithopone
had degraded and adhered so strongly to the copper that it could
not be removed therefrom whilst Formulations 2 and 3 could easily
be removed from the copper plate.

The tensile strengths of the elastomers were measured at
$20^{\circ}$C by extending dumbell specimens at 20 inches/minute until
break. The tensile strengths both before and after the heat
conditioning are given in the following Table.

|  | Formulation 1 | Formulation 2 | Formulation 3 |
|---|---|---|---|
| Tensile strength before heat conditioning (Mega Pascals) | 8.5 | 9.2 | 8.2 |
| Tensile strength after heat conditioning (Mega Pascals) | Could not be Tested. | 8.6 | 8.4 |

EXAMPLE 2

A cable coating formulation was prepared from the same basic
mixture used in Example 1 together with 7 parts by weight of bis
(tertiary butyl peroxy isopropyl) benzene and divided into two
compounds A containing 1 part by weight of mercaptobenzenoimi-
dazole and 8 parts by weight of zinc oxide whilst the other
compound B contained 0.5 parts by weight of mercaptobenzenoimi-
dazole and 5 parts by weight of "Lithopone".

These two compounds were extruded from an extruder head at
between 80 to $100^{\circ}$C over an untinned single strand copper conductor of 1.75 millimetre diameter to give a final diameter of
4.25 millimetres (corresponding to 1.25 millimetre wall thickness
insulation) and the coating vulcanized in line by passing at 60
metres/minute through a 50 metre continuous vulcanisation tube
heated with steam at $205^{\circ}$C. Following vulcanization the insulation
was removed from the conductor and its tensile strength and
elongation at break measured before and after heat ageing for
seven days at $135^{\circ}$C. In addition samples of the insulated wire
were heat aged for seven days at $135^{\circ}$C and the conductor removed
and the properties of the insulation determined with the follow-
ing results.

0005320

|  | Compound A | Compound B |
|---|---|---|
| **Original Properties** | | |
| Tensile Strength, MPa | **8.6** | 8.3 |
| Elongation at break % | 390 | 420 |
| | | |
| **Properties after 7 days ageing at 135°C without conductor** | | |
| Tensile Strength, MPa | 7.5 | 8.3 |
| Elongation at break % | 210 | 350 |

EXAMPLE 3

Cable coating formulations were prepared containing:

- 65 parts of the ethylene, propylene ethylidene norbornene elastomer commercially available as Vistalon 5630 50 parts of an ethylene/propylene copolymer containing 67 weight percent ethylene of mooney viscosity (100°C) of 40.
- 50 parts of calcined clay
- 150 parts of whiting
- 1.5 parts of a silane
- 30 parts of a Paraffinic oil

and 1 part of an activator

and various stabiliser/antioxidant packages as described in the following Table 1. The compositions were coated onto sheets of clean copper and heat aged for 7 days at 135°C and for the sake of comparison the compositions were similarly heat aged but out of contact with the copper. The results of the tests are given in Table 1.

## TABLE 1

| Stabilizer Package | | | | |
|---|---|---|---|---|
| Poly-trimethyl dihydroquinone | 1 | 1 | 1 | 1 |
| 2-mercaptobenzimidazole | -- | — | 0.5 | 0.5 |
| Lithopone | 10 | --- | -- | 10 |
| Bis(tertiary butyl peroxyisopropyl) benzene | 7.5 | 7.5 | 8 | 8 |
| **Original Properties (Steam cure 10 min 180°C** | | | | |
| Tensile Strength, MPa | 6.1 | 5.8 | 5.6 | 5.7 |
| Elongation at Break, % | 310 | 300 | 320 | 320 |
| **Ageing; 7 days 135°C - Normal** | | | | |
| Tensile Strength, MPa | 6.0 | 5.6 | 6.0 | 6.1 |
| Elongation at Break, % | 285 | 280 | 300 | 300 |
| **Ageing; 7 days 135°C - Copper Contract** | | | | |
| Tensile Strength, MPa | 5.2 | 2.6 | 3.6 | 5.8 |
| Elongation at Break, % | 245 | 150 | 185 | 270 |
| Condition | Brown | Brown | Cracking | Good |

The tensile strength and elongation at break were measure by the dumbell technique described in Example 1.

0005320

CLAIMS:

1. A cross-linkable composition stabilised for direct contact with copper comprising an olefine polymer or copolymer containing from 0.5 to 10 parts by weight of the composition of zinc sulphide and from 1 to 5 parts by weight of a cross-linking agent per 100 parts of the olefine polymer or copolymer.

2. A cross-linkable composition according to claim 1 in which the olefine polymer or copolymer is a copolymer of ethylene and propylene.

3. A cross-linkable composition according to claim 2 in which the copolymer also contains ethylidene norbornene or hexadiene.

4. A cross-linkable composition according to any of the preceding claims in which the zinc sulphide is present as Lithopone.

5. A cross-linkable composition according to any of the preceding claims in which the cross-linking agent is a free radical generator.

6. An untinned copper conductor coated with an insulator comprising a cross-linked olefine polymer containing from 0.5 to 10 parts by weight of zinc sulphide.

7. A conductor according to claim 6 comprising copper wire.

8. A conductor according to claim 6 or claim 7 in which the olefine polymer is a copolymer of ethylene and propylene.

9. A conductor according to claim 8 in which the olefine polymer is a terpolymer of ethylene, propylene and ethylidene norbornene.